# EUROPÄISCHE PATENTSCHRIFT

(11) **EP 0 641 635 B1**
(45) Veröffentlichungstag und Bekanntmachung des Hinweises auf die Patenterteilung: **23.04.1997**
(21) Anmeldenummer: 94113695.4
(22) Anmeldetag: 01.09.1994
(51) Int. Cl.: B29C 44/56

(54) **Verfahren zur Herstellung von Schaumstoffplatten mit verbesserten Schalldämmeigenschaften**
Method of making foam plates with improved thermal insulation properties
Procédé de production de plaques de mousse de propriétés thermo-isolantes améliorées

(30) Priorität: 08.09.1993 DE 4330314
(43) Veröffentlichungstag der Anmeldung: 08.03.1995
(73) Patentinhaber: BASF Aktiengesellschaft, 67063 Ludwigshafen (DE)
(72) Erfinder: Liene, Werner, D-68219 Mannheim (DE)

(56) Entgegenhaltungen:
- EP-A- 0 062 882
- EP-A- 0 151 183
- EP-A- 0 422 281
- GB-A- 2 040 948

## Beschreibung

Die Erfindung betrifft ein verfahren zur Herstellung von Schaumstoffplatten gemäß dem Oberbegriff des Anspruchs 1.

Schaumstoffplatten, beispielsweise aus Polyolefinschäumen oder aus Polystyrolextruder- und Polystyrolpartikelschaum werden seit langem zur Wärme- und Schalldämmung eingesetzt.

Für die Schalldämmung, insbesondere Trittschalldämmung, werden vorzugsweise Schaumstoffplatten eingesetzt, die durch zeitweiliges Zusammenpressen in Richtung der Plattendicke elastifiziert wurden.

Beispielsweise ist die Verwendung von elastifizierten EPS-Dämmplatten (EPS: expandierbares Polystyrol) für die Trittschalldämmung nach DIN 18164, Teil 2, "Schaumkunststoffe als Dämmstoffe für das Bauwesen" bekannt. Derartige Platten müssen ein ausreichendes Federungsvermögen haben. Das Federungsvermögen wird nach DIN 18 164, Teil 2, durch die dynamische Steifigkeit s' (auch Trittschall-Verbesserungsmaß genannt) der Dämmschicht einschließlich der in ihr eingeschlossenen Luft gekennzeichnet.

Trittschalldämmplatten müssen aus bautechnischen Gründen eine möglichst geringe dynamische Steifigkeit bei einer relativ eng begrenzten Verformung unter Lasteinwirkung aufweisen (Differenz zwischen Lieferdicke bzw. Nenndicke und der Dicke unter Belastung, ausgedrückt als (d_{L}-d_{B})-Wert nach DIN 18164, Teil 2).

Dies bedeutet, daß der Stauchungsgrad (auch "Elastifizierungsgrad" genannt) und damit die Verformung des Schaumstoffgefüges nur in einem eng begrenzten Maße eingestellt werden kann.

Bei der bekannten Nachbehandlung von Schaumstoffplatten durch Stauchen (auch "Elastifizieren" genannt) werden Schaumstoffplatten mit einer Rohdichte (gleichbedeutend mit Dichte) typischerweise zwischen 8 und 10 kg/m³ einmal bis zu einem maximalen Stauchungsmaß von 66 % ihrer ursprünglichen Dicke zusammengepreßt, das für eine bestimmte Zeit (üblicherweise weniger als 60 Sekunden) aufrechterhalten wird.

Nach Aufhebung der Pressung bleibt eine geringe irreversible Verformung des Zellgefüges, wobei die Zellen eine Anisotropie der Art aufweisen, daß das Verhältnis von langer zu kurzer Achse zwischen 1,15 und 1,25 liegt. Die beispielsweise bei einer 25 mm dicken Schaumstoffplatte aus Polystyrolpartikelschaum erzielten Werte der dynamischen Steifigkeit liegen um 10 MN/m³. Die (d_{L}-d_{B})-Werte liegen etwa zwischen 1 und 3 mm. Hierbei ist es oft schwierig, Werte der dynamischen Steifigkeit von kleiner/gleich 10 MN/m³ reproduzierbar einzustellen.

Aufgabe der vorliegenden Erfindung war es daher, die Schalldämmeigenschaften der bekannten Schaumstoffplatten zu verbessern und insbesondere deren einfache und sichere Einstellung zu erreichen.

Diese Aufgabe wird erfindungsgemäß gelöst durch ein Verfahren zur Herstellung von Schaumstoffplatten mit einer dynamischen Steifigkeit kleiner/gleich 10 MN/m³ durch Nachbehandlung von üblichen und bekannten Schaumstoffplatten durch Zusammenpressen, wobei Schaumstoffplatten aus Polystyrolpartikelschaum mit einer Rohdichte zwischen 17 und 30 kg/m³ bis zu einem maximalen Stauchungsmaß zwischen 60 und 90 % ihrer ursprünglichen Dicke zusammengepreßt werden, die Stauchung aufgehoben wird und dieser Vorgang mindestens einmal wiederholt wird.

Zweckmäßige Weiterbildungen der Erfindung sind in den abhängigen Ansprüchen beschrieben.

In der deutschen Patentanmeldung P 42 08 759.7 sind Schaumstoffplatten mit einer Anisotropie der Art, daß die Zellen in Richtung der Plattendicke gestaucht sind, beschrieben, wobei die Schaumstoffplatten eine Rohdichte zwischen 15 und 45 kg/m³ haben und in den gestauchten Zellen das Verhältnis zwischen langer und kurzer Achse zwischen 1,2 und 1,6 liegt.

Beschrieben wird darin außerdem ein Verfahren zur Herstellung dieser Schaumstoffplatten durch zeitweiliges Zusammenpressen von üblichen und bekannten Schaumstoffplatten, wobei Schaumstoffplatten mit einer Rohdichte zwischen 11 und 40 kg/m³ bis zu einem maximalen Stauchungsmaß zwischen 50 und 90 % ihrer ursprünglichen Dicke zusammengepreßt werden, dieses Stauchungsmaß für mindestens 10 Sekunden aufrechterhalten wird und anschließend die Stauchung aufgehoben wird.

Nach der GB-A 2 040 948 werden Platten aus sehr spröden Schaumstoffen, wie Polycarbodiimid, auf etwa 50 % ihrer ursprünglichen Dicke gestaucht, vorzugsweise durch gegenüberliegende Rollen. Dabei kommt es, insbesondere durch die Sprödigkeit der eingesetzten Schaumstoffe, zu einer Zerstörung der Zellstruktur an den Rändern der Schaumstoffplatten, während im Kern der Platte die Zellstruktur unverändert bleibt, oder zu einer vollständigen Zerstörung der Zellstruktur. Die Verbesserung der Schalldämmeigenschaften der Platten gemäß D2 wird auf diese Zerstörung der Zellstruktur zurückgeführt. Demgegenüber kommt es bei dem erfindungsgemäßen Verfahren nicht zu einer Zerstörung der Zellstruktur, sondern zu einer Anisotropie der Zellen. Die EP-A 422 281 betrifft ein Verfahren zur Herstellung von Polyimid-Schaumstoffen mit verbesserter Flammfestigkeit durch Verpressen von Schaumfolien bei erhöhter Temperatur. Eine Verbesserung der Schalldämmeigenschaften wird nicht erwähnt.

Im erfindungsgemäßen Verfahren können Schaumstoffplatten oder Schaumstoffblöcke eingesetzt werden. In der Regel werden jedoch Schaumstoffblöcke eingesetzt, aus denen anschließend Schaumstoffplatten in der geeigneten Größe auf übliche und bekannte Weise senkrecht zur Elastifizierungsrichtung geschnitten werden.

Hierdurch wird auf sehr wirtschaftliche Weise in einem Schritt das erfindungsgemäße Verfahren für eine Vielzahl von zukünftigen Schaumstoffplatten durchgeführt. Außerdem gibt es keine negativen Einflüsse durch Randeffekte.

In der Beschreibung werden daher die Begriffe "Schaumstoffblöcke" und "Schaumstoffplatten" gleichbedeutend verwendet, sofern sich aus der entsprechenden Stelle nichts anderes ergibt.

Die den erfindungsgemäßen Schaumstoffplatten zugrundeliegenden, vorzugsweise isotropen Schaumstoffplatten aus Polystyrolpartikelschaum werden auf übliche und bekannte Weise hergestellt, beispielsweise dadurch, daß treibmittelhaltige expandierbare Polystyrolperlen durch Erhitzen auf Temperaturen oberhalb ihres Erweichungspunktes, beispielsweise mit Heißluft oder vorzugsweise mit Dampf, expandiert werden. Die erhaltenen Schaumstoffpartikel können nach dem Abkühlen und gegebenenfalls einer Zwischenlagerung durch erneutes Erhitzen in einer nicht gasdicht schließenden Form zu einem Schaumstoffblock verschweißt werden.

Geeignete expandierbare Polystyrolperlen sind beispielsweise in der EP-B-106 129, der EP-A-383 133 und der DE-A-39 15 602 beschrieben.

Vorzugsweise werden expandierbare Polystyrolperlen mit einer Größe zwischen 1 und 2 mm eingesetzt.

Die frisch hergestellten Schaumstoffplatten werden vor der Durchführung des erfindungsgemäßen Verfahrens vorzugsweise für mindestens 3 Stunden und besonders bevorzugt für mindestens 20 Stunden gelagert. Dadurch wird eine bessere Reexpansion der gepreßten Platten erreicht, wobei außerdem kleinere (d_{L}-d_{B})-Werte erzielt werden.

Die im erfindungsgemäßen Verfahren eingesetzten bekannten Schaumstoffplatten oder Schaumstoffblöcke haben in der Regel Rohdichten zwischen 17 und 30 kg/m³.

Im Vergleich hierzu haben die Schaumstoffplatten oder Schaumstoffblöcke nach der Durchführung des erfindungsgemäßen Verfahrens in der Regel Rohdichten zwischen 20 und 35 kg/m³.

Infolge der Durchführung des erfindungsgemäßen Verfahrens kann sich allerdings eine bleibende Zunahme der Rohdichte der Schaumstoffblöcke um bis zu 30 %, bezogen auf die Rohdichte vor Durchführung des Verfahrens, ergeben.

Beim erfindungsgemäßen Verfahren werden die Schaumstoffblöcke im allgemeinen in Richtung einer Flächennormalen auf ein maximales Stauchungsmaß zwischen 60 und 90 %, vorzugsweise zwischen 70 und 85 % und besonders bevorzugt zwischen 70 und 80 % ihrer ursprünglichen Dicke mehrmals, d.h. mindestens zweimal, zusammengepreßt. In Abhängigkeit von der gewünschten dynamischen Steifigkeit ≤ 10 MN/m³ können die Schaumstoffplatten unter Anwendung von bestimmten Programmen für die Geschwindigkeit der Stauchung und der anschließenden Entlastung mehrmals bis zu einem maximalen Stauchungsmaß von 90 % gestaucht werden.

Im allgemeinen wird die Stauchung durch Annäherung zweier planparalleler Metallplatten mit einer konstanten Stauchgeschwindigkeit und ohne eine zwischengeschaltete Halteperiode bis zu einem maximalen Stauchungsmaß durchgeführt. Beim maximalen Stauchungsmaß werden die Blöcke dann vorzugsweise sofort entlastet, wobei der Abstand zwischen den beiden Metallplatten im allgemeinen ebenfalls mit einer konstanten Entlastungsgeschwindigkeit wieder vergrößert wird.

Der Stauchvorgang wird erfindungsgemäß mehrmals durchgeführt, wobei die Anzahl der Stauchungsvorgänge im Hinblick auf die gewünschte Eigenschaft gewählt wird. Zur Verbesserung der dynamischen Steifigkeit hat sich eine Anzahl von vorzugsweise 5 bis 10 Stauchungsvorgängen als vorteilhaft erwiesen.

Die dabei angewandte Stauchgeschwindigkeit beträgt in der Regel zwischen 1 und 300, vorzugsweise zwischen 30 und 95 und besonders bevorzugt 70 und 80 cm/min.

Die Stauchung kann auf übliche und bekannte Weise in Pressen für EPS durchgeführt werden.

Nach vollständiger Entlastung werden die nach dem erfindungsgemäßen Verfahren nachbehandelten Schaumstoffblöcke in der Regel für mindestens 1 Tag unter Normalbedingungen abgelagert. Hierdurch entspannen sich die Schaumstoffblöcke auf ihr endgültiges Maß.

Anschließend können aus diesen Schaumstoffblöcken durch Schneiden senkrecht zur Elastifizierungsrichtung auf übliche und bekannte Weise Schaumstoffplatten erhalten werden. Diese Schaumstoffplatten haben vorzugsweise eine Dicke von 30 bis 120 mm.

Das erfindungsgemäße Verfahren hat neben der Verbesserung der dynamischen Steifigkeit s' der Schaumstoffplatten zusätzlich den Vorteil, daß damit eine verringerte Wärmeleitfähigkeit erreicht wird.

### Beispiele und Vergleichsbeispiele

In den Beispielen und Vergleichsbeispielen wurden Schaumstoffplatten aus Polystyrolpartikelschaum eingesetzt.

Die Stauchung wurde in einer Presse zwischen zwei planparallen Platten mit einer Preßkraft von 25 MP und einer Stauchgeschwindigkeit von 75 cm/min durchgeführt und insgesamt fünfmal durchgeführt. Bei Erreichen der maximalen Stauchung wurden die beiden Platten sofort mit einer Entlastungsgeschwindigkeit von 192 cm/min auseinander gefahren.

Die gestauchten Platten wurden nach der Entlastung für 2 Tage unter Normalbedingungen gelagert und anschließend die Plattendicke bestimmt.

An den durch Stauchen nachbehandelten Schaumstoffplatten und an unbehandelten Schaumstoffplatten wurde die dynamische Steifigkeit und der (d_{L}-d_{B})-Wert nach DIN 18 164, Teil 2, sowie teilweise die Wärmeleitfähigkeit nach DIN 52 612, Teil 1, bestimmt.

Die Ergebnisse sind in der Tabelle dargestellt. Der Vergleich der Beispiele und Vergleichsbeispiele zeigt, daß bei Durchführung des erfindungsgemäßen Verfahrens Schaumstoffplatten mit verbesserten Werten für die dynamische Steifigkeit erhalten werden. Diese können außerdem besonders leicht und reproduzierbar eingestellt werden.

**Tabelle**

| | Rohdichte vor Stauchung kg/m³ | Rohdichte nach Stauchung kg/m³ | max. Stauchung % | Anzahl der Stauchungen n | Plattendicke mm | d_{L}-d_{B} mm | dyn. Steifigkeit MN/m³ | Wärmeleitfähigkeit bei 10°C mW/mK |
|---|---|---|---|---|---|---|---|---|
| Beispiel 1 | 17 | 21,8 | 76 | 5 | 60 | 1,4 | 6,0 | 33,2 |
| Vergl. Beisp. 2 | 17 | - | 0 | 0 | 40 | 0 | 55,7 | 36,3 |
| Vergl. Beisp. 1 | 17 | 20,6 | 76 | 1 | 60 | 0,4 | 22,9 | |
| Beispiel 2 | 17 | 22,0 | 76 | 5 | 40 | 1,5 | 9,8 | |

## Patentansprüche

1. Verfahren zur Herstellung von Schaumstoffplatten mit einer dynamischen Steifigkeit kleiner/gleich 10 MN/m³ durch Nachbehandlung von üblichen und bekannten Schaumstoffplatten durch Zusammenpressen, dadurch gekennzeichnet, daß Schaumstoffplatten aus Polystyrolpartikelschaum mit einer Rohdichte zwischen 17 und 30 kg/m³ bis zu einem maximalen Stauchungsmaß zwischen 60 und 90 % ihrer ursprünglichen Dicke zusammengepreßt werden, die Stauchung aufgehoben wird und dieser Vorgang mindestens einmal wiederholt wird.

2. Verfahren nach Anspruch 1, dadurch gekennzeichnet, daß die nachbehandelten Schaumstoffplatten eine Dicke von 30 bis 120 mm haben.

3. Verfahren nach einem der Ansprüche 1 oder 2, dadurch gekennzeichnet, daß die Schaumstoffplatten bis zu einem maximalen Stauchungsmaß zwischen 70 und 85 % ihrer ursprünglichen Dicke zusammengepreßt werden.

4. Verfahren nach einem der Ansprüche 1 bis 3, dadurch gekennzeichnet, daß das Zusammenpressen der Schaumstoffplatten durch Annäherung zweier planparalleler Platten mit einer konstanten Stauchgeschwindigkeit zwischen 1 und 300 cm/min geschieht.

## Claims

1. A process for producing foam boards having a dynamic rigidity of not greater than 10 MN/m³ by aftertreating customary and known foam boards by compression, which comprises compressing polystyrene particle foam boards having a density of from 17 to 30 kg/m³ to a maximum extent of from 60 to 90% of their original thickness, releasing the compression, and repeating this operation at least once.

2. A process as claimed in claim 1 wherein the aftertreated foam boards have a thickness of from 30 to 120 mm.

3. A process as claimed in claim 1 or 2 wherein the foam boards are compressed to a maximum extent of from 70 to 85% of their original thickness.

4. A process as claimed in any of claims 1 to 3 wherein the foam boards are compressed by moving two plane-parallel plates toward each other at a constant compression rate of from 1 to 300 cm/min.

## Revendications

1. Procédé de fabrication de plaques en mousse, d'un rigidité dynamique inférieure ou égale à 10 MN/m³, par le traitement subséquent de plaques de mousse usuelles et connues, par compression mutuelle, caractérisé en ce que les plaques de mousse en mousse de particules de polystyrène, d'une masse volumique brute comprise entre 17 et 30 kg/m³ sont comprimées ensemble, jusqu'à une ampleur d'écrasement maximale qui varie de 60 à 90% de leur épaisseur d'origine, on supprime la compression ou l'écrasement et on répète au moins une fois ce processus.

2. Procédé suivant la revendication 1, caractérisé en ce que les plaques de mousse soumises au traitement ultérieur possèdent une épaisseur de 30 à 120 mm.

3. Procédé suivant l'une des revendications 1 et 2, caractérisé en ce que l'on comprime mutuellement les plaques de mousse, jusqu'à une ampleur d'écrasement ou de compression maximale, comprise entre 70 et 85% de leur épaisseur d'origine.

4. Procédé suivant l'une quelconque des revendications 1 à 3, caractérisé en ce que l'on entreprend la compression mutuelle des plaques de mousse, en faisant se rapprocher deux plaques parallèles planes, avec une vitesse de compression ou d'écrasement constante, comprise entre 1 et 300 cm/min.
